# FASCICULE DE BREVET EUROPEEN

(11) **EP 3 628 877 B1**
(45) Date de publication et mention de la délivrance du brevet: **02.11.2022**
(21) Numéro de dépôt: 19197703.2
(22) Date de dépôt: 17.09.2019
(51) Int. Cl.: F16B 37/04

(54) **DISPOSITIF D'ECROU ENCAGE POUR UN MONTAGE SUR UN MONTANT CREUX**
KÄFIGMUTTER-VORRICHTUNG FÜR EINE MONTAGE AUF EINEM HOHLEN STÄNDER
CAGED NUT DEVICE FOR INSTALLATION ON A HOLLOW POST

(30) Priorité: 26.09.2018 FR 1858812
(43) Date de publication de la demande: 01.04.2020
(73) Titulaire: A. Raymond et Cie, 38000 Grenoble (FR)
(72) Inventeur: OULES, Anthony, 38380 Saint Laurent du Pont (FR)
(74) Mandataire: Germain Maureau

(56) Documents cités:
- DE-A1- 4 343 642
- FR-A1- 2 656 905
- FR-A1- 2 968 369
- US-A- 4 875 816
- US-A- 6 062 602

## Description

### DOMAINE TECHNIQUE

La présente invention concerne globalement un dispositif d'écrou encagé destiné à un montage sur une pièce support où le dispositif d'écrou encagé comprend :
- un écrou pourvu d'un filetage interne apte à être engagé par une vis,
- un support d'écrou formé dans une pièce monobloc délimitant une cage logeant l'écrou de façon que l'écrou est immobilisé en rotation dans la cage autour de l'axe du filetage interne et délimitant une face avant pourvue d'une ouverture permettant l'engagement de la vis dans le filetage interne de l'écrou au travers de l'ouverture.

L'invention concerne également un agencement comprenant au moins un tel dispositif d'écrou encagé et la pièce support.

L'invention trouve une application notamment dans le domaine des véhicules automobiles, où le dispositif d'écrou encagé permet de fixer un objet du véhicule sur une pièce support appartenant à la caisse du véhicule, par serrage de cet objet par l'intermédiaire de la vis et de l'écrou ainsi encagé.

### ETAT DE LA TECHNIQUE ANTERIEUR

Les dispositifs et agencements de ce type sont déjà connus, par exemple à l'image des solutions décrites dans les documents FR2968369A1, FR2730771A1 et EP1729019B1.

Ces solutions connues sont limitées à des applications où la pièce support revêt la forme d'un panneau ou d'une équerre, ce qui limite le champ d'application à d'autres types de pièces support notamment de type montant creux.

Par ailleurs, ce type de solution peut être envisagé dans des situations fréquentes où les écrous sont destinés à être implantés dans des emplacements peu accessibles ou non visibles. Le montage des écrous sur les pièces supports par l'intermédiaire des dispositifs d'écrous encagés restent parfois difficile à exécuter en raison de la difficulté d'accès pour les opérateurs chargés du montage et/ou en raison du caractère peu pratique et convivial à manipuler des dispositifs d'écrous encagés.

Le document US4875816A décrit un moyen de fixation à cage adaptée pour être monté dans un élément de cadre creux sans soudure. Il comprend un corps de fixation ayant un alésage fileté et une cage renfermant le corps de fixation et lui fournissant une plage de déplacement limitée dans au moins une direction et permettant un accès à l'alésage fileté, tout en le bloquant en rotation. Des éléments de maintien comprennent des éléments rigides et des éléments à ressort s'étendent depuis la cage et s'emboîtent par friction à l'intérieur de l'élément de cadre creux. L'élasticité des ressorts permettent d'attacher le dispositif et de le retenir dans l'élément de cadre creux.

Cette solution est complexe et onéreuse en raison de la forme très complexe du corps de fixation, qui est nettement plus complexe et onéreuse à obtenir qu'un écrou. D'autre part, en raison de la forme complexe et encombrante des éléments à ressort qui assurent le maintien de la cage dans le cadre creux, la mise en place du moyen de fixation à cage dans l'élément de cadre creux reste mal aisée, notamment dans les zones difficiles d'accès voire nécessitant une manipulation en aveugle par le monteur.

### EXPOSE DE L'INVENTION

La présente invention a pour but de proposer un dispositif d'écrou encagé destiné à un montage sur une pièce support qui réponde aux problématiques présentées ci-avant

Notamment, le but de l'invention est de proposer un dispositif d'écrou encagé destiné à un montage sur une pièce support, qui réponde à au moins l'un des objectifs suivants :
- être économique et fiable,
- permettre un montage sur une pièce support de type montant tubulaire creux,
- permettre une mise en place aisée et intuitive, notamment pour un montage à des emplacements difficiles d'accès et/ou non visibles,
- garantir un verrouillage fiable et aisé du dispositif d'écrou encagé sur la pièce support.

Ce but peut être atteint grâce à la mise en œuvre d'un dispositif d'écrou encagé pour montage sur un montant creux de sorte à occuper une configuration fonctionnelle où le dispositif d'écrou encagé est essentiellement positionné dans un volume interne du montant, le dispositif d'écrou encagé comprenant un écrou pourvu d'un filetage interne apte à être engagé par une vis et un support d'écrou monobloc délimitant une cage logeant l'écrou en l'immobilisant en rotation autour de l'axe du filetage interne et délimitant une face avant pourvue d'une ouverture permettant l'engagement de la vis dans le filetage interne à travers l'ouverture et une face arrière à partir de laquelle un fût de guidage tubulaire s'étend dans le prolongement du filetage interne, une extrémité distale du fût de guidage délimitant une surface de guidage configurée pour prendre appui et glisser contre une face interne d'une première paroi du montant au moment du montage du dispositif d'écrou encagé sur le montant jusqu'à la configuration fonctionnelle.

Certains aspects préférés mais non limitatifs sont les suivants.

La surface de guidage est incluse dans un plan principal incliné de sorte que le bord libre du fût de guidage prend la forme d'un pan coupé, le plan principal étant spatialement orienté de sorte que la droite normale au plan principal forme un angle avec l'axe du filetage interne compris entre 30° et 60°.

La hauteur et la section du fût de guidage et l'angle entre la droite normale au plan principal et l'axe du filetage interne sont adaptés de sorte que le montage du dispositif d'écrou encagé vers la configuration fonctionnelle est obtenu par :
une insertion du dispositif d'écrou encagé à travers une ouverture de montage délimitée par une deuxième paroi du montant durant laquelle la surface de guidage, par appui et glissement contre la face interne de la première paroi, guide le dispositif d'écrou encagé par rapport au montant selon une trajectoire déterminée,
un pivotement du dispositif d'écrou encagé par rapport au montant entraînant la cessation de l'appui de la surface de guidage contre la face interne de la première paroi et le verrouillage du dispositif d'écrou encagé dans la configuration fonctionnelle par encliquetage sur la deuxième paroi dans une zone donnée du contour de l'ouverture de montage.

Le support d'écrou délimite une tige de positionnement s'étendant depuis la cage dans une première direction orientée transversalement à l'axe du filetage interne de l'écrou, une extrémité distale de la tige de positionnement étant apte à s'insérer dans une lumière de positionnement délimitée par une troisième paroi du montant distincte des première et deuxième parois durant l'insertion du dispositif d'écrou encagé à travers l'ouverture de montage.

La tige de positionnement délimite une butée axiale apte à bloquer l'insertion axiale de l'extrémité distale de la tige de positionnement à l'intérieur de la lumière de positionnement suivant la première direction, par une mise en contact de la butée axiale contre la troisième paroi du montant.

La cage délimite une butée axiale apte à être active dans un sens opposé à la butée axiale et à pouvoir venir en appui contre la face interne de la deuxième paroi lorsque le dispositif d'écrou encagé occupe sa configuration fonctionnelle, la distance séparant les butées axiales étant strictement inférieure à la distance séparant la face interne de la deuxième paroi et la face interne de la troisième paroi.

Le support d'écrou délimite une languette de préhension s'étendant depuis la cage dans une deuxième direction orientée transversalement à l'axe du filetage interne de l'écrou, la languette de préhension étant configurée de sorte à être positionnée à l'extérieur du volume interne du montant lorsque le dispositif d'écrou encagé occupe sa configuration fonctionnelle.

Le support d'écrou délimite une patte de verrouillage s'étendant depuis la cage dans une troisième direction sensiblement parallèle à l'axe du filetage interne de l'écrou et dont une extrémité distale est pourvue d'un ergot d'encliquetage apte à s'encliqueter sur la deuxième paroi du montant, dans la zone donnée du contour de l'ouverture de montage, durant le pivotement du dispositif d'écrou encagé par rapport au montant.

A son extrémité distale, la patte de verrouillage délimite une butée de rattrapage d'effort agencée pour limiter la déformation élastique de l'ergot d'encliquetage lorsqu'un effort de vissage au-delà d'une valeur prédéterminée est appliqué à la vis par rapport à l'écrou.

L'invention porte également sur un agencement comprenant un montant creux et au moins un tel dispositif d'écrou encagé monté sur le montant de sorte que le dispositif d'écrou encagé occupe la configuration fonctionnelle où le dispositif d'écrou encagé est essentiellement positionné dans un volume interne du montant, et une vis apte à être engagée dans le filetage interne de l'écrou du dispositif d'écrou encagé.

Le montant et le dispositif d'écrou encagé peuvent notamment être conformés de sorte que le montage du dispositif d'écrou encagé vers la configuration fonctionnelle est obtenu par :
une insertion du dispositif d'écrou encagé à travers une ouverture de montage délimitée par une deuxième paroi du montant durant laquelle la surface de guidage, par appui et glissement contre la face interne de la première paroi, guide le dispositif d'écrou encagé par rapport au montant selon une trajectoire déterminée,
un pivotement du dispositif d'écrou encagé par rapport au montant entraînant la cessation de l'appui de la surface de guidage contre la face interne de la première paroi et le verrouillage du dispositif d'écrou encagé dans la configuration fonctionnelle par encliquetage sur la deuxième paroi dans une zone donnée du contour de l'ouverture de montage.

### BREVE DESCRIPTION DES DESSINS

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
- les figures 1 à 4 sont différentes vues en perspective d'un exemple de dispositif d'écrou encagé selon un aspect de l'invention,
- les figures 5 à 7 représentent un exemple d'agencement selon un autre aspect de l'invention pour des étapes successives au cours du montage du dispositif d'écrou encagé sur le montant.

### EXPOSE DETAILLE DE MODES DE REALISATION PARTICULIERS

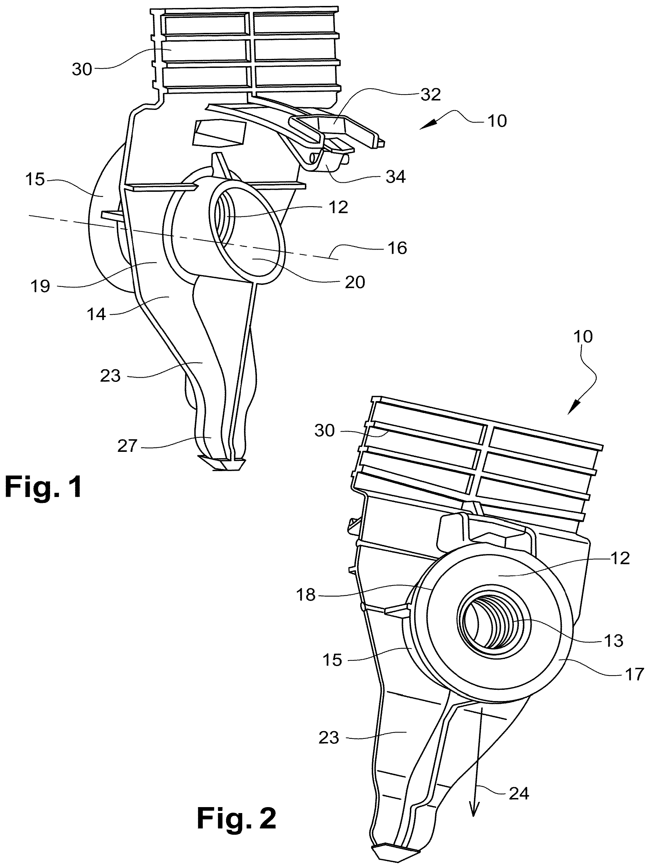

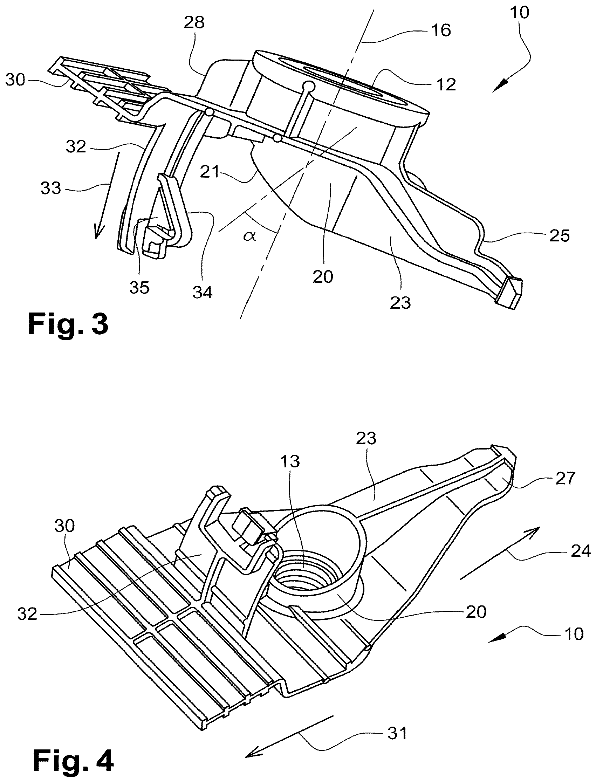

Sur les figures 1 à 7 et dans la suite de la description, il est décrit un dispositif d'écrou encagé 10 destiné à un montage sur une pièce support.

L'invention trouve une application notamment dans le domaine des véhicules automobiles où le dispositif d'écrou encagé 10 permet de fixer un objet du véhicule sur une pièce support appartenant à la caisse du véhicule, la fixation de l'objet se pratiquant par un serrage de cet objet contre la pièce support par l'intermédiaire d'une vis et de l'écrou ainsi encagé dans lequel vient s'engager la vis.

De la manière représentée, le dispositif d'écrou encagé 10 est avantageusement adapté à un montage sur une pièce support sous la forme d'un montant 11 partiellement représenté. Cela permet d'offrir des possibilités très variées et nombreuses de domaines d'application. Le montant 11 est de forme creuse, typiquement de forme tubulaire, de type monobloc ou constitué par l'assemblage d'au moins deux pièces entre elles. Le montant 11 appartient par exemple au berceau moteur du véhicule automobile.

Autrement dit, le dispositif d'écrou encagé 10 et le montant 11 comprennent respectivement des premiers éléments et des seconds éléments d'un même système de montage capable d'assurer une fixation éventuellement réversible du dispositif d'écrou encagé 10 sur le montant 11 dans une configuration fonctionnelle du dispositif d'écrou encagé 10. Les premiers éléments et deuxièmes éléments décrits plus loin sont aptes à coopérer entre eux de sorte à fixer le dispositif d'écrou encagé 10 sur le montant 11 dans sa configuration fonctionnelle lorsque les premiers éléments et deuxièmes éléments coopèrent entre eux.

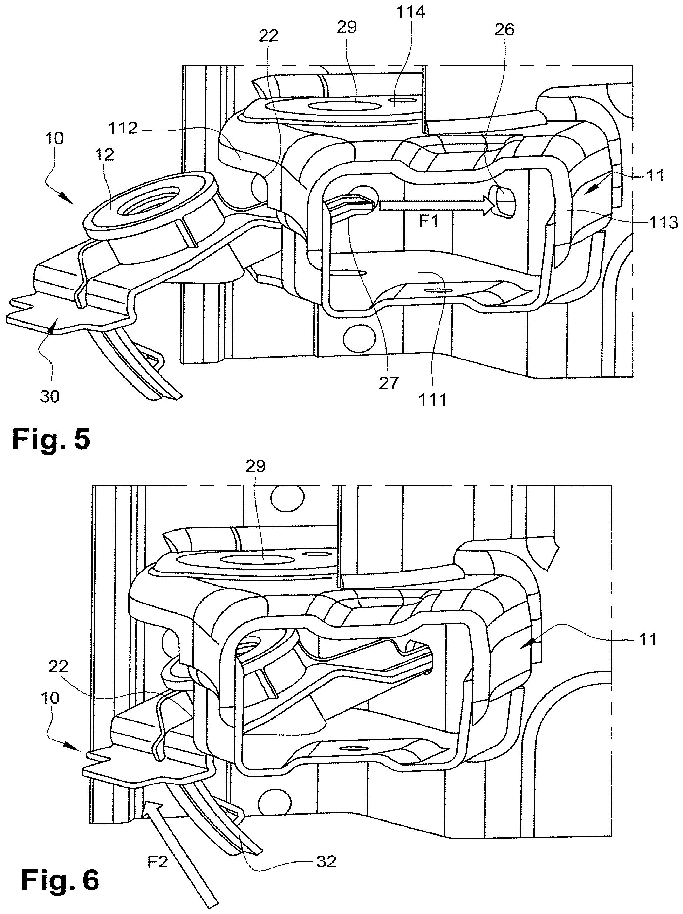

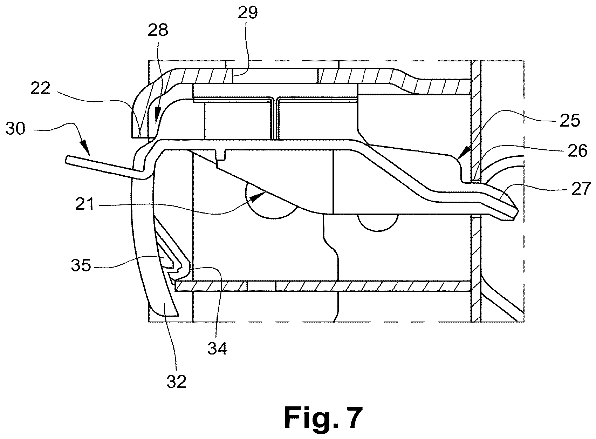

Lorsqu'il est monté sur le montant 11, le dispositif d'écrou encagé 10 détaillé sur les figures 1 à 4 occupe une configuration fonctionnelle dans laquelle le dispositif d'écrou encagé 10 est essentiellement positionné dans un volume interne délimité intérieurement par différentes parois du montant 11. Cette situation est représentée sur la figure 7, tandis que les figures 5 et 6 montrent la manière de réaliser le montage du dispositif d'écrou encagé 10 sur le montant 11 pour arriver à la configuration fonctionnelle de la figure 7.

Le dispositif d'écrou encagé 10 comprend un écrou 12 pourvu d'un filetage interne 13 apte à être engagé par une vis (non représentée et extérieure au dispositif d'écrou encagé 10) et un support d'écrou 14 formé dans une pièce monobloc délimitant une cage 15 logeant l'écrou 12 de façon que l'écrou 12 est immobilisé en rotation dans la cage 15 autour de l'axe 16 du filetage interne 13.

La nature et la conception de l'écrou 12 ne sont pas limitatives en soi. A titre d'exemple, l'écrou 12 est un écrou M12 réalisé dans une matière métallique, par exemple un acier de classe 10, potentiellement avec un traitement thermique et/ou antirouille. de manière très avantageuse, l'écrou 12 peut être un écrou classique et normalisé, ce qui permet de l'obtenir de manière très simple et à bas coût.

La nature et la conception du support d'écrou 14 ne sont pas limitatives en soi non plus. Le support d'écrou 14 est par exemple réalisé dans une matière plastique, notamment thermoplastique. Une manière simple, avantageuse et efficace est de prévoir que le support d'écrou soit surmoulé sur la pièce constitutive de l'écrou 12. Le plastique utilisé est par exemple une matière PA66.

Ces dispositions permettent que le dispositif d'écrou encagé 10 soit particulièrement économique et fiable.

L'invention ne se limite pas au dispositif d'écrou encagé 10 en tant que tel et concerne également un agencement comprenant le montant 11 de forme creuse et au moins un tel dispositif d'écrou encagé 10 monté sur le montant 11 de sorte à occuper la configuration fonctionnelle, ainsi qu'une vis apte à être engagée dans le filetage interne 13 délimité par l'écrou 12.

La cage 15 délimite une face avant 17 pourvue d'une ouverture 18 permettant l'engagement de la vis dans le filetage interne 13 de l'écrou 12 en passant au travers de l'ouverture 18. Selon un mode de réalisation, l'ouverture 18 présente un contour correspondant à la section externe de l'écrou 12.

La cage 15 délimite une face arrière 19, décalée par rapport à la face avant 17 de la cage 15 suivant l'axe 16 du filetage interne 13, à partir de laquelle un fût de guidage 20 ayant une forme tubulaire s'étend dans le prolongement du filetage interne 13. Le fait que le fût de guidage 20 soit solidaire de la cage 15 permet que l'obtention du dispositif d'écrou encagé 10 soit simple et économique.

Comme cela est visible sur les figures 1, 3 et 4 notamment, une extrémité distale du fût de guidage 20 comporte un bord libre délimitant une surface de guidage 21 configurée pour prendre appui et glisser contre une face interne d'une première paroi 111 du montant 11 au moment de la mise en œuvre du montage du dispositif d'écrou encagé 10 sur le montant 11 jusqu'à occuper la configuration fonctionnelle (figure 7). L'action de prendre appui et de glisser de la surface de guidage 21 contre la face interne de la première paroi 111 du montant 11 est visible sur la figure 6. L'extrémité distale du fût de guidage 20 est une extrémité opposée, suivant l'axe du fût de guidage 20, à une extrémité proximale du fût de guidage 20 raccordée à la face arrière 19 de la cage 15.

Plus en détails, le dispositif d'écrou encagé 10 est conformé, en rapport avec la conception du montant 11, de telle sorte que le montage du dispositif d'écrou encagé 10 sur le montant 11 est obtenu de manière très simple et limitant le nombre d'opérations pour le monteur, par :
- une insertion (schématisée par la flèche F1 sur la figure 5) du dispositif d'écrou encagé 10 à travers une ouverture de montage 22 délimitée par une deuxième paroi 112 du montant 11 distincte de la première paroi 111 du montant 11, durant laquelle la surface de guidage 21, par appui et glissement contre la face interne de la première paroi 111 du montant 11, guide le dispositif d'écrou encagé 10 par rapport au montant 11 selon une trajectoire déterminée,
- un pivotement (schématisé par la flèche F2 sur la figure 6) du dispositif d'écrou encagé 10 par rapport au montant 11, entraînant la cessation de l'appui de la surface de guidage 21 contre la face interne de la première paroi 111 du montant 11 et le verrouillage du dispositif 10 dans sa configuration fonctionnelle par encliquetage automatique dans la deuxième paroi 112 dans une zone donnée du contour de l'ouverture de montage 22.

Ces dispositions peuvent être obtenues par une adaptation de la hauteur et de la section du fût de guidage 20 ainsi que de l'angle α (définit plus loin) entre la droite normale au plan principal et l'axe 16 du filetage interne 13.

Selon un mode de réalisation non limitatif, l'axe du fût de guidage 20 coïncide avec l'axe 16 du filetage interne 13 de l'écrou 12, permettant à la vis destinée à s'engager dans le filetage interne 13 de s'étendre le long de la longueur du fût de guidage 20, voire de déboucher au-delà de l'extrémité distale du fût de guidage 20, après vissage de la vis dans l'écrou 12 solidaire du support d'écrou 14 dont le fût de guidage 20 est solidaire.

Selon un mode de réalisation non limitatif tel que représenté, la surface de guidage 21 est incluse dans un plan principal incliné de sorte que le bord libre de l'extrémité distale du fût de guidage 20 prend la forme d'un pan coupé. Le plan principal est spatialement orienté de sorte que la droite normale au plan principal forme un angle noté α avec l'axe 16 du filetage interne 13 compris entre 30° et 60°. Il n'en demeure pas moins que la surface de guidage 21 peut éventuellement présenter une forme gauche, c'est-à-dire être spatialement non plane.

Le pivotement F2 sur la figure 6 est réalisé après avoir réalisé l'insertion F1 du dispositif d'écrou encagé 10 selon la figure 5. Durant l'insertion F1 du dispositif d'écrou encagé 10 par coulissement (figure 5), le fait que la surface de guidage 21 prenne appui et glisse contre la face interne de la première paroi 111 du montant 11 assure un guidage spatial du dispositif d'écrou encagé 10 par rapport au montant 11 selon la trajectoire prédéterminée par cette coopération de surfaces par une liaison appui-plan, où le dispositif d'écrou encagé 10 occupe une position fixement basculée par rapport à l'orientation qu'il occupera ensuite, après le pivotement F2 consécutif à l'insertion F1, dans la configuration fonctionnelle. L'angle de basculement du dispositif d'écrou encagé 10 durant le pivotement F2 correspond à l'angle α évoqué précédemment.

Il en résulte une mise en place aisée et intuitive du dispositif d'écrou encagé 10, notamment pour un montage à des emplacements difficiles d'accès et/ou non visibles pour le monteur.

Selon un mode de réalisation avantageux mais non limitatif, le support d'écrou 14 délimite une tige de positionnement 23 qui s'étend depuis la cage 15 dans une première direction 24 orientée transversalement à l'axe 16 du filetage interne 13 de l'écrou 12. La tige de positionnement 23 est conformée de sorte que son extrémité distale 27 est apte à s'insérer dans une lumière de positionnement 26 délimitée par une troisième paroi 113 du montant 11 distincte des première et deuxième parois 111, 112, notamment située en regard de la deuxième paroi 112, durant l'insertion F1 du dispositif d'écrou encagé 10 à travers l'ouverture de montage 22. L'extrémité distale 27 correspond à l'extrémité de la tige de positionnement 23 qui est opposée, selon la première direction 24, à une extrémité proximale de la tige de positionnement 23 raccordée à la cage 15. Autrement dit, la lumière de positionnement 26 est positionnée de sorte à se trouver le long de la trajectoire de l'extrémité distale 27 lorsque le dispositif d'écrou encagé 10 coulisse le long de la trajectoire déterminée au moment de l'insertion F1 tandis que la lumière de positionnement 26 est légèrement plus grande que les dimensions externes de l'extrémité distale 27 afin d'autoriser l'extrémité distale 27 à pénétrer dans la lumière de positionnement 26 à la fin du mouvement d'insertion F1.

Un avantage est qu'en référence à la figure 5, la surface de guidage 21 permet d'aider les monteurs à glisser la cage 15 dans la lumière de positionnement 26 via l'extrémité distale 27. Cette opération se faisant en aveugle, un guidage est utile pour le confort et la rapidité de l'opération.

Avantageusement, la tige de positionnement 23 délimite une butée axiale 25 apte à bloquer l'insertion axiale de la tige de positionnement 23 à l'intérieur de la lumière de positionnement 26 le long de la première direction 24 par une mise en contact de la butée axiale 25 contre la face interne de la troisième paroi 113 du montant 11. La butée axiale 25 permet au monteur, au moment du contact de la butée axiale 25 contre la face interne de la troisième paroi 113, de déterminer très rapidement et de manière intuitive le moment où l'insertion F1 est terminée et où il est nécessaire de pratiquer le basculement F2.

La cage 15 peut délimiter une butée axiale 28, conçue de sorte à être active dans un sens opposé à la butée axiale 25, en étant apte à pouvoir venir en appui contre la face interne de la deuxième paroi 112 du montant 11 lorsque le dispositif d'écrou encagé 10 occupe sa configuration fonctionnelle. La distance séparant les butées axiales 25, 28 est strictement inférieure à la distance séparant la face interne de la deuxième paroi 112 et la face interne de la troisième paroi 113. La présence combinée de telles butées axiales 25, 28 permet d'introduire un jeu dans le positionnement réellement occupé par le dispositif d'écrou encagé 10 par rapport au montant 11 dans la configuration fonctionnelle, permettant au final de compenser et rattraper les tolérances de positionnement de la vis par rapport au montant 11, par exemple sur une plage pouvant aller de 1 à 2 mm.

La configuration fonctionnelle du dispositif d'écrou encagé 10 correspond à la position permettant l'engagement de la vis dans le filetage interne 13 en faisant traverser la vis dans une lumière de montage 29 délimitée par une quatrième paroi 114 du montant 11 distincte des parois 111, 112, 113, notamment située en regard de la première paroi 111.

Comme cela est visible sur les figures, le support d'écrou 14 délimite une languette de préhension 30 s'étendant depuis la cage 15 dans une deuxième direction 31 orientée transversalement à l'axe 16 du filetage interne 13 de l'écrou 12. La deuxième direction 31 est notamment orientée radialement dans un sens opposé à la première direction 24 autour de l'axe 16 du filetage interne 13. Comme cela est visible sur la figure 7, la languette de préhension 30 est configurée de sorte à être positionnée à l'extérieur du volume interne du montant 11 lorsque le dispositif d'écrou encagé 10 occupe sa configuration fonctionnelle. La languette de préhension 30 permet une manipulation aisée et efficace du dispositif d'écrou encagé 10 pour le monteur même lorsqu'il est nécessaire de le monter à des emplacements difficiles d'accès et/ou non visibles, permettant finalement de rendre le montage très aisé et convivial pour le monteur. Par une traction sur la languette de préhension 30 par le monteur, il est également possible éventuellement de démonter le dispositif d'écrou encagé 10 de manière très simple.

Selon un mode de réalisation avantageux mais non limitatif, le support d'écrou 14 délimite une patte de verrouillage 32 qui s'étend depuis la cage 15 dans une troisième direction 33 sensiblement parallèle à l'axe 16 du filetage interne 13 de l'écrou 12 et dont une extrémité distale est pourvue d'un ergot d'encliquetage 34 apte à venir s'encliqueter sur la deuxième paroi 112 du montant 11, dans la zone donnée du contour de l'ouverture de montage 22, durant le pivotement F2 du dispositif d'écrou encagé 10 par rapport au montant 11.

La patte de verrouillage 32 peut présenter une forme rectiligne ou, comme cela est représenté, légèrement incurvée le long de la troisième direction 33. Par « sensiblement parallèle », on entend ici que la troisième direction 33 est strictement parallèle à l'axe 16 du filetage interne 13, ou que l'angle formé entre la troisième direction 33 et l'axe 16 est inférieur à 10°.

L'extrémité distale de la patte de verrouillage 32 correspond à l'extrémité opposée, selon la troisième direction 33, à une extrémité proximale de la patte de verrouillage 32 qui est raccordée à la cage 15.

La patte de verrouillage 32 permet d'assurer un verrouillage automatique du dispositif d'écrou encagé 10 par rapport au montant 11 dans sa configuration fonctionnelle au moment de la fin du pivotement F2. Cela garantit un verrouillage fiable et aisé du dispositif d'écrou encagé 10 sur le montant 11. La patte de verrouillage 32 obture alors tout ou partie de l'ouverture de montage 22. Une traction sur la languette de préhension 30 permet de plier élastiquement la patte de verrouillage 32 suffisamment pour désengager l'ergot d'encliquetage 34 et libérer le dispositif d'écrou encagé 10 de son état verrouillé. L'ergot d'encliquetage 34 est configuré pour être plus souple que le reste de la patte de verrouillage 32 pour limiter la déformation de la patte de verrouillage 32.

A son extrémité distale, la patte de verrouillage 32 peut également délimiter une butée de rattrapage d'effort 35 agencée pour limiter la déformation élastique de l'ergot d'encliquetage 34 dans le cas où un effort de vissage au-delà d'une valeur prédéterminée est appliqué à la vis par rapport à l'écrou 12, permettant pour des raisons de fiabilité, d'éviter tout risque de déverrouillage (par une libération non désirée de l'ergot d'encliquetage 34 hors du contour de l'ouverture de montage 22 qui résulterait de la pression exercée par la deuxième paroi 112 sur l'ergot d'encliquetage 34 sous l'effet du vissage de la vis dans le dispositif d'écrou encagé 10 selon un effort de vissage supérieur à cette valeur prédéterminée) du dispositif d'écrou encagé 10 lorsque l'effort de vissage appliqué la vis est supérieur à cette valeur prédéterminée.

## Revendications

1. Dispositif d'écrou encagé (10) pour montage sur un montant (11) creux de sorte à occuper une configuration fonctionnelle où le dispositif d'écrou encagé (10) est essentiellement positionné dans un volume interne du montant (11), le dispositif d'écrou encagé (10) comprenant d'une part un écrou (12) pourvu d'un filetage interne (13) apte à être engagé par une vis, d'autre part un support d'écrou (14) monobloc délimitant une cage (15) logeant l'écrou (12) en l'immobilisant en rotation autour de l'axe (16) du filetage interne (13) et délimitant une face avant (17) pourvue d'une ouverture (18) permettant l'engagement de ladite vis dans le filetage interne (13) à travers l'ouverture (18) et une face arrière (19), le dispositif étant **caractérisé en ce qu'**à partir de la face arrière (19) un fût de guidage (20) tubulaire s'étend dans le prolongement du filetage interne (13), une extrémité distale du fût de guidage (20) délimitant une surface de guidage (21) configurée pour prendre appui et glisser contre une face interne d'une première paroi (111) du montant (11) au moment du montage du dispositif d'écrou encagé (10) sur le montant (11) jusqu'à la configuration fonctionnelle.

2. Dispositif d'écrou encagé (10) selon la revendication 1, **caractérisé en ce que** la surface de guidage (21) est incluse dans un plan principal incliné de sorte que le bord libre du fût de guidage (20) prend la forme d'un pan coupé, le plan principal étant spatialement orienté de sorte que la droite normale au plan principal forme un angle (α) avec l'axe (16) du filetage interne (13) compris entre 30° et 60°.

3. Dispositif d'écrou encagé (10) selon la revendication 2, **caractérisé en ce que** la hauteur et la section du fût de guidage (20) et l'angle (α) entre la droite normale au plan principal et l'axe (16) du filetage interne (13) sont adaptés de sorte que le montage du dispositif d'écrou encagé (10) vers la configuration fonctionnelle est obtenu par :
une insertion (F1) du dispositif d'écrou encagé (10) à travers une ouverture de montage (22) délimitée par une deuxième paroi (112) du montant (11) durant laquelle la surface de guidage (21), par appui et glissement contre la face interne de la première paroi (111), guide le dispositif d'écrou encagé (10) par rapport au montant (11) selon une trajectoire déterminée,
un pivotement (F2) du dispositif d'écrou encagé (10) par rapport au montant (11) entraînant la cessation de l'appui de la surface de guidage (21) contre la face interne de la première paroi (111) et le verrouillage du dispositif d'écrou encagé (10) dans la configuration fonctionnelle par encliquetage sur la deuxième paroi (112) dans une zone donnée du contour de l'ouverture de montage (22).

4. Dispositif d'écrou encagé (10) selon la revendication 3, **caractérisé en ce que** le support d'écrou (14) délimite une tige de positionnement (23) s'étendant depuis la cage (15) dans une première direction (24) orientée transversalement à l'axe (16) du filetage interne (13) de l'écrou (12), une extrémité distale (27) de la tige de positionnement (23) étant apte à s'insérer dans une lumière de positionnement (26) délimitée par une troisième paroi (113) du montant (11) distincte des première et deuxième parois (111, 112) durant l'insertion (F1) du dispositif d'écrou encagé (10) à travers l'ouverture de montage (22).

5. Dispositif d'écrou encagé (10) selon la revendication 4, **caractérisé en ce que** la tige de positionnement (23) délimite une butée axiale (25) apte à bloquer l'insertion axiale de l'extrémité distale (27) de la tige de positionnement (23) à l'intérieur de la lumière de positionnement (26) suivant la première direction (24), par une mise en contact de la butée axiale (25) contre la troisième paroi (113) du montant (11).

6. Dispositif d'écrou encagé (10) selon la revendication 5, **caractérisé en ce que** la cage (15) délimite une butée axiale (28) apte à être active dans un sens opposé à la butée axiale (25) et à pouvoir venir en appui contre la face interne de la deuxième paroi (112) lorsque le dispositif d'écrou encagé (10) occupe sa configuration fonctionnelle, la distance séparant les butées axiales (25, 28) étant strictement inférieure à la distance séparant la face interne de la deuxième paroi (112) et la face interne de la troisième paroi (113).

7. Dispositif d'écrou encagé (10) selon l'une quelconque des revendications 3 à 6, **caractérisé en ce que** le support d'écrou (14) délimite une patte de verrouillage (32) s'étendant depuis la cage (15) dans une troisième direction (33) sensiblement parallèle à l'axe (16) du filetage interne (13) de l'écrou (12) et dont une extrémité distale est pourvue d'un ergot d'encliquetage (34) apte à s'encliqueter sur la deuxième paroi (112) du montant (11), dans la zone donnée du contour de l'ouverture de montage (22), durant le pivotement (F2) du dispositif d'écrou encagé (10) par rapport au montant (11).

8. Dispositif d'écrou encagé (10) selon la revendication 7, **caractérisé en ce qu'**à son extrémité distale, la patte de verrouillage (32) délimite une butée de rattrapage d'effort (35) agencée pour limiter la déformation élastique de l'ergot d'encliquetage (34) lorsqu'un effort de vissage au-delà d'une valeur prédéterminée est appliqué à la vis par rapport à l'écrou (12).

9. Dispositif d'écrou encagé (10) selon l'une quelconque des revendications 1 à 8, **caractérisé en ce que** le support d'écrou (14) délimite une languette de préhension (30) s'étendant depuis la cage (15) dans une deuxième direction (31) orientée transversalement à l'axe (16) du filetage interne (13) de l'écrou (12), la languette de préhension (30) étant configurée de sorte à être positionnée à l'extérieur du volume interne du montant (11) lorsque le dispositif d'écrou encagé (10) occupe sa configuration fonctionnelle.

10. Agencement comprenant un montant (11) creux et au moins un dispositif d'écrou encagé (10) selon l'une quelconque des revendications 1 à 9 monté sur le montant (11) de sorte que le dispositif d'écrou encagé (10) occupe la configuration fonctionnelle où le dispositif d'écrou encagé (10) est essentiellement positionné dans un volume interne du montant (11), et une vis apte à être engagée dans le filetage interne (13) de l'écrou du dispositif d'écrou encagé (10).

11. Agencement selon la revendication 10, **caractérisé en ce que** le montant (11) et le dispositif d'écrou encagé (10) sont conformés de sorte que le montage du dispositif d'écrou encagé (10) vers la configuration fonctionnelle est obtenu par :
une insertion (F1) du dispositif d'écrou encagé (10) à travers une ouverture de montage (22) délimitée par une deuxième paroi (112) du montant (11) durant laquelle la surface de guidage (21), par appui et glissement contre la face interne de la première paroi (111), guide le dispositif d'écrou encagé (10) par rapport au montant (11) selon une trajectoire déterminée,
un pivotement (F2) du dispositif d'écrou encagé (10) par rapport au montant (11) entraînant la cessation de l'appui de la surface de guidage (21) contre la face interne de la première paroi (111) et le verrouillage du dispositif d'écrou encagé (10) dans la configuration fonctionnelle par encliquetage sur la deuxième paroi (112) dans une zone donnée du contour de l'ouverture de montage (22).

## Patentansprüche

1. Käfigmutter-Vorrichtung (10) für eine Montage auf einem hohlen Ständer (11) derart, um eine Funktionskonfiguration einzunehmen, bei der die Käfigmutter-Vorrichtung (10) im Wesentlichen in einem Innenvolumen des Ständers (11) positioniert ist, wobei die Käfigmutter-Vorrichtung (10) einerseits eine Mutter (12), die mit einem Innengewinde (13) versehen ist, das imstande ist, dass eine Schraube darin eingreift, und andererseits eine einteilige Mutterstütze (14) umfasst, die einen Käfig (15) begrenzt, der die Mutter (12) aufnimmt, indem er deren Drehung um die Achse (16) des Innengewindes (13) blockiert, und eine Vorderseite (17), die mit einer Öffnung (18) versehen ist, die das Eingreifen der Schraube in das Innengewinde (13) durch die Öffnung (18) hindurch ermöglicht, und eine Rückseite (19) begrenzt,
wobei die Vorrichtung **dadurch gekennzeichnet ist, dass** sich ausgehend von der Rückseite (19) in der Fortsetzung des Innengewindes (13) eine rohrförmige Führungshülse (20) erstreckt, wobei ein distales Ende der Führungshülse (20) eine Führungsoberfläche (21) begrenzt, die konfiguriert ist, um sich bei der Montage der Käfigmutter-Vorrichtung (10) an dem Ständer (11) bis zur Funktionskonfiguration an einer Innenseite einer ersten Wand (111) des Ständers (11) anzulegen und darauf zu gleiten.

2. Käfigmutter-Vorrichtung (10) nach Anspruch 1, **dadurch gekennzeichnet, dass** die Führungsoberfläche (21) in einer schrägen Hauptebene eingeschlossen ist, sodass der freie Rand der Führungshülse (20) die Form einer abgestumpften Ecke annimmt, wobei die Hauptebene derart räumlich ausgerichtet ist, dass die Gerade senkrecht zur Hauptebene einen Winkel (*α*) mit der Achse (16) des Innengewindes (13) bildet, der zwischen 30° und 60° liegt.

3. Käfigmutter-Vorrichtung (10) nach Anspruch 2, **dadurch gekennzeichnet, dass** die Höhe und der Querschnitt der Führungshülse (20) und der Winkel (*α*) zwischen der Geraden senkrecht zur Hauptebene und der Achse (16) des Innengewindes (13) derart angepasst sind, dass die Montage der Käfigmutter-Vorrichtung (10) zur Funktionskonfiguration erhalten wird durch:
ein Einführen (F1) der Käfigmutter-Vorrichtung (10) durch eine Montageöffnung (22) hindurch, die durch eine zweite Wand (112) des Ständers (11) begrenzt wird, bei dem die Führungsoberfläche (21) durch Anlegen und Gleiten an der Innenseite der ersten Wand (111) die Käfigmutter-Vorrichtung (10) in Bezug auf den Ständer (11) entlang einer bestimmten Bahn führt,
ein Schwenken (F2) der Käfigmutter-Vorrichtung (10) in Bezug auf den Ständer (11), was zu einem Ende des Anlegens des Führungsoberfläche (21) an der Innenseite der ersten Wand (111), und zur Verriegelung der Käfigmutter-Vorrichtung (10) in der Funktionskonfiguration durch Einrasten in der zweiten Wand (112) in einem gegebenen Bereich der Kontur der Montageöffnung (22) führt.

4. Käfigmutter-Vorrichtung (10) nach Anspruch 3, **dadurch gekennzeichnet, dass** die Mutterstütze (14) eine Positionierungsstange (23) begrenzt, die sich aus dem Käfig (15) in einer ersten Richtung (24) erstreckt, die quer zur Achse (16) des Innengewindes (13) der Mutter (12) ausgerichtet ist, wobei ein distales Ende (27) der Positionierungsstange (23) imstande ist, in ein Positionierungslangloch (26), das durch eine dritte Wand (113) des Ständers (11) begrenzt wird, die sich von der ersten und zweiten Wand (111, 112) unterscheidet, beim Einführen (F1) der Käfigmutter-Vorrichtung (10) durch die Montageöffnung (22) hindurch eingeführt zu werden.

5. Käfigmutter-Vorrichtung (10) nach Anspruch 4, **dadurch gekennzeichnet, dass** die Positionierungsstange (23) einen axialen Anschlag (25) begrenzt, der imstande ist, die axiale Einführung des distalen Endes (27) der Positionierungsstange (23) im Inneren des Positionierungslangloches (26) entlang der ersten Richtung (24) durch eine Kontaktaufnahme des axialen Anschlags (25) mit der dritten Wand (113) des Ständers (11) zu blockieren.

6. Käfigmutter-Vorrichtung (10) nach Anspruch 5, **dadurch gekennzeichnet, dass** der Käfig (15) einen axialen Anschlag (28) begrenzt, der imstande ist, in einer entgegengesetzten Richtung zum axialen Anschlag (25) aktiv zu sein, und sich an der Innenseite der zweiten Wand (112) anlegen zu können, wenn die Käfigmutter-Vorrichtung (10) ihre Funktionskonfiguration einnimmt, wobei der Abstand, der die axialen Anschläge (25, 28) trennt, streng kleiner ist, als der Abstand, der die Innenseite der zweiten Wand (112) und die Innenseite der dritten Wand (113) trennt.

7. Käfigmutter-Vorrichtung (10) nach einem der Ansprüche 3 bis 6, **dadurch gekennzeichnet, dass** die Mutterstütze (14) eine Verrieglungslasche (32) begrenzt, die sich aus dem Käfig (15) in eine dritte Richtung (33) im Wesentlichen parallel zur Achse (16) des Innengewindes (13) der Mutter (12) erstreckt, und von der ein distales Ende mit einer Einrastnase (34) versehen ist, die imstande ist, beim Schwenken (F2) der Käfigmutter-Vorrichtung (10) in Bezug auf den Ständer (11) in der zweiten Wand (112) des Ständers (11) in dem gegebenen Bereich der Kontur der Montageöffnung (22) einzurasten.

8. Käfigmutter-Vorrichtung (10) nach Anspruch 7, **dadurch gekennzeichnet, dass** die Verriegelungslasche (32) an ihrem distalen Ende einen Kraftaufnahmeanschlag (35) begrenzt, der angeordnet ist, um die elastische Verformung der Einrastnase (34) zu begrenzen, wenn eine Schraubkraft über einem vorbestimmten Wert auf die Schraube in Bezug auf die Mutter (12) angelegt wird.

9. Käfigmutter-Vorrichtung (10) nach einem der Ansprüche 1 bis 8, **dadurch gekennzeichnet, dass** die Mutterstütze (14) eine Greiflasche (30) begrenzt, die sich aus dem Käfig (15) in eine zweite Richtung (31) erstreckt, die quer zur Achse (16) des Innengewindes (13) der Mutter (12) ausgerichtet ist, wobei die Greiflasche (30) derart konfiguriert ist, um außerhalb des Innenvolumens des Ständers (11) positioniert zu werden, wenn die Käfigmutter-Vorrichtung (10) ihre Funktionskonfiguration einnimmt.

10. Anordnung, umfassend einen hohlen Ständer (11) und mindestens eine Käfigmutter-Vorrichtung (10) nach einem der Ansprüche 1 bis 9, die auf den Ständer (11) montiert wird, sodass die Käfigmutter-Vorrichtung (10) im Wesentlichen in einem Innenvolumen des Ständers (11) positioniert ist, und eine Schraube, die imstande ist, in das Innengewinde (13) der Mutter der Käfigmutter-Vorrichtung (10) eingeführt zu werden.

11. Anordnung nach Anspruch 10, **dadurch gekennzeichnet, dass** der Ständer (11) und die Käfigmutter-Vorrichtung (10) derart ausgeführt sind, dass die Montage der Käfigmutter-Vorrichtung (10) zur Funktionskonfiguration erhalten wird durch:
ein Einführen (F1) der Käfigmutter-Vorrichtung (10) durch eine Montageöffnung (22) hindurch, die durch eine zweite Wand (112) des Ständers (11) begrenzt wird, bei dem die Führungsoberfläche (21) durch Anlegen und Gleiten an der Innenseite der ersten Wand (111) die Käfigmutter-Vorrichtung (10) in Bezug auf den Ständer (11) entlang einer bestimmten Bahn führt,
ein Schwenken (F2) der Käfigmutter-Vorrichtung (10) in Bezug auf den Ständer (11), was zu einem Ende des Anlegens des Führungsoberfläche (21) an der Innenseite der ersten Wand (111), und zur Verriegelung der Käfigmutter-Vorrichtung (10) in der Funktionskonfiguration durch Einrasten in der zweiten Wand (112) in einem gegebenen Bereich der Kontur der Montageöffnung (22) führt.

## Claims

1. A caged nut device (10) for mounting on a hollow post (11) so as to occupy a functional configuration where the caged nut device (10) is essentially positioned in an inner volume of the post (11), the caged nut device (10) comprising, on the one hand, a nut (12) provided with an internal thread (13) adapted to be engaged by a screw, on the other hand, a one-piece nut support (14) delimiting a cage (15) housing the nut (12) by immobilizing it in rotation about the axis (16) of the internal thread (13) and delimiting a front face (17) provided with an aperture (18) allowing the engagement of said screw in the internal thread (13) through the aperture (18) and a rear face (19), the device being **characterized in that** from the rear face (19) a tubular guide shaft (20) extends in the continuation of the internal thread (13), a distal end of the guide shaft (20) delimiting a guide surface (21) configured to bear and slide against an inner face of a first wall (111) of the post (11) at the time of mounting the caged nut device (10) on the post (11) to the functional configuration.

2. The caged nut device (10) according to claim 1, **characterized in that** the guide surface (21) is included in an inclined main plane such that the free edge of the guide shaft (20) takes the shape of a cutoff, the main plane being spatially oriented such that the straight line perpendicular to the main plane forms an angle (α) with the axis (16) of the internal thread (13) comprised between 30° and 60°.

3. The caged nut device (10) according to claim 2, **characterized in that** the height and the section of the guide shaft (20) and the angle (α) between the straight line perpendicular to the main plane and the axis (16) of the internal thread (13) are adapted such that the mounting of the caged nut device (10) to the functional configuration is obtained by:
an insertion (F1) of the caged nut device (10) through a mounting aperture (22) delimited by a second wall (112) of the post (11) during which the guide surface (21), by bearing and sliding against the inner face of the first wall (111), guides the caged nut device (10) relative to the post (11) along a determined trajectory,
a pivoting (F2) of the caged nut device (10) relative to the post (11) causing stoppage of the bearing of the guide surface (21) against the inner face of the first wall (111) and the locking of the caged nut device (10) in the functional configuration by snap-fitting on the second wall (112) in a given area of the contour of the mounting aperture (22).

4. The caged nut device (10) according to claim 3, **characterized in that** the nut support (14) delimits a positioning rod (23) extending from the cage (15) in a first direction (24) oriented transversely to the axis (16) of the internal thread (13) of the nut (12), a distal end (27) of the positioning rod (23) being capable of being inserted into a positioning opening (26) delimited by a third wall (113) of the post (11) distinct from the first and second walls (111, 112) during the insertion (F1) of the caged nut device (10) through the mounting aperture (22).

5. The caged nut device (10) according to claim 4, **characterized in that** the positioning rod (23) delimits an axial stop (25) capable of blocking the axial insertion of the distal end (27) of the positioning rod (23) inside the positioning opening (26) along the first direction (24), by contacting the axial stop (25) against the third wall (113) of the post (11).

6. The caged nut device (10) according to claim 5, **characterized in that** the cage (15) delimits an axial stop (28) capable of being active in a direction opposite to the axial stop (25) and of being able to bear against the inner face of the second wall (112) when the caged nut device (10) occupies its functional configuration, the distance separating the axial stops (25, 28) being strictly less than the distance separating the inner face of the second wall (112) and the inner face of the third wall (113).

7. The caged nut device (10) according to any one of claims 3 to 6, **characterized in that** the nut support (14) delimits a locking lug (32) extending from the cage (15) in a third direction (33) substantially parallel to the axis (16) of the internal thread (13) of the nut (12) and whose distal end is provided with a snap-fitting pin (34) adapted to be snap-fitted on the second wall (112) of the post (11), in the given area of the contour of the mounting aperture (22), during the pivoting (F2) of the caged nut device (10) relative to the post (11).

8. The caged nut device (10) according to claim 7, **characterized in that**, at its distal end, the locking lug (32) delimits a force adjustment stop (35) arranged to limit the elastic deformation of the snap-fitting pin (34) when a screwing force beyond a predetermined value is applied to the screw relative to the nut (12).

9. The caged nut device (10) according to any one of claims 1 to 8, **characterized in that** the nut support (14) delimits a gripping tab (30) extending from the cage (15) in a second direction (31) oriented transversely to the axis (16) of the internal thread (13) of the nut (12), the gripping tab (30) being configured so as to be positioned outside the internal volume of the post (11) when the caged nut device (10) occupies its functional configuration.

10. An arrangement comprising a hollow post (11) and at least one caged nut device (10) according to any one of claims 1 to 9 mounted on the post (11) such that the caged nut device (10) occupies the functional configuration where the caged nut device (10) is essentially positioned in an internal volume of the post (11), and a screw capable of being engaged in the internal thread (13) of the nut of the caged nut device (10).

11. The arrangement according to claim 10, **characterized in that** the post (11) and the caged nut device (10) are shaped such that the mounting of the caged nut device (10) to the functional configuration is obtained by:
an insertion (F1) of the caged nut device (10) through a mounting aperture (22) delimited by a second wall (112) of the post (11) during which the guide surface (21), by bearing and sliding against the inner face of the first wall (111), guides the caged nut device (10) relative to the post (11) along a determined trajectory,
a pivoting (F2) of the caged nut device (10) relative to the post (11) causing stoppage of the bearing of the guide surface (21) against the inner face of the first wall (111) and the locking of the caged nut device (10) in the functional configuration by snap-fitting on the second wall (112) in a given area of the contour of the mounting aperture (22).
